# EUROPÄISCHE PATENTSCHRIFT

(11) **EP 3 569 299 B1**
(45) Veröffentlichungstag und Bekanntmachung des Hinweises auf die Patenterteilung: **20.03.2024**
(21) Anmeldenummer: 19170639.9
(22) Anmeldetag: 23.04.2019
(51) Int. Cl.: F23J 13/06, B01D 35/02, C02F 1/00, B01D 24/06, B01D 24/40, F23J 13/00

(54) **SCHORNSTEINABWASSER-FILTERSYSTEM FÜR SCHORNSTEINE**
CHIMNEY WASTE WATER FILTER SYSTEM FOR CHIMNEYS
SYSTÈME FILTRANT DES EAUX USÉES DE CHEMINÉE POUR CHEMINÉES

(30) Priorität: 14.05.2018 DE 102018111393
(43) Veröffentlichungstag der Anmeldung: 20.11.2019
(73) Patentinhaber: Gantner, Rupert Magnus, 83734 Hausham (DE)
(72) Erfinder: Gantner, Rupert Magnus, 83734 Hausham (DE)
(74) Vertreter: Beckord & Niedlich Patentanwälte PartG mbB

(56) Entgegenhaltungen:
- EP-A1- 0 123 834
- DE-A1- 19 517 398

## Beschreibung

Die Erfindung betrifft ein Schornsteinabwasser-Filtersystem für einen Schornstein, ein Schornsteinsystem mit einem solchen Schornsteinabwasser-Filtersystem sowie eine Verwendung des Schornsteinabwasser-Filtersystems zur Wasserabführung in einem Schornstein.

Bei Schornsteinen, die eine niedrige Abgastemperatur aufweisen, kommt es häufig dazu, dass die Taupunkttemperatur der abzuführenden Abgase im Schornstein unterschritten wird. Durch die Unterschreitung der Taupunkttemperatur entsteht Kondensat im und teilweise auch an den Außenwänden eines Schornsteininnenrohrs, welches nach unten zur Schornsteinsohle abfließt. Dieses Kondensat kann z. B. in Verbindung mit Ruß oder Schwefelrückständen ein saures Gemisch bilden und den Schornstein beschädigen. Zudem kann der anfallende Ruß einen am unteren Ende, üblicherweise in einer Bodenplatte, des Schornsteins geschalteten Kondensatablauf verstopfen, wodurch die entstehenden Kondensate eventuell nicht mehr abfließen können und dadurch eine Wassersäule im Schornstein entsteht. Auch starke Regen- oder Schneefälle können eine Wassersäule im Schornstein schnell ansteigen lassen, vor allem, wenn - wie oben beschrieben - der Kondensatablauf beispielsweise durch Ruß oder Laub verstopft ist. Diese im Schornstein herablaufenden und sich ansammelnden Flüssigkeiten, wie beispielsweise Regen, Schnee, Kondensat oder auch ein Gemisch aus diesen mit Ruß und/oder Laub werden im Folgenden pauschal als "Schornsteinabwasser" oder kurz als "Kondensat" oder "Wasser" bezeichnet. Ist der Kondensatablauf verstopft und hat sich eine Wassersäule im Schornstein gebildet, die bis über die Unterkante der üblichen Revisionsöffnung im unteren Bereich des Schornsteins (in einem Abstand oberhalb der Bodenplatte) reicht, kann das Schornsteinabwasser beim Öffnen der Revisionsöffnung schwallartig heraustreten, was zum einen unangenehm ist und u. U. zu erheblichen Schäden führen kann.

Es soll in diesem Zusammenhang bereits hier darauf hingewiesen werden, dass sich die Begriffe "über" und "unter" bzw. "oben" und "unten" etc. allgemein und auch im Rahmen der vorliegenden Erfindung im Folgenden auf die Ausrichtung in einem im Haus eingebauten Schornstein bzw. Schornsteininnenrohr beziehen, welches sich üblicherweise vertikal erstreckt. Dabei entspricht "oben" in Richtung einer Schornsteinöffnung weisend und "unten" in Richtung eines Schornsteinbodens weisend.

Reinigt ein Schornsteinfeger mittels Kehrgeräten, beispielsweise Kehrkugeln, den Schornstein, kann es zu einem Aufprall des Kehrgeräts auf die Bodenplatte bzw. Grundplatte des Schornsteinbodens kommen. Dies kann zu einem weiteren Problem führen, da die Grundplatte üblicherweise im Wesentlichen aus Schamott besteht und in der Regel nur eine Wandstärke von ca. 2 cm aufweist. Bei einem Aufprall des Kehrgeräts auf den Schornsteinboden können sich daher leicht Risse in der dünnen Grundplatte bilden, in die das Schornsteinabwasser eindringen kann.

In der EP 0244 724 A2 wird daher vorgeschlagen, einen Kondensatsammler, bestehend aus einem Schornsteininnenrohrelement mit einem an die Innenwandungen anschließenden Boden, einem Abflusskanal und einer an der Außenseite des Kondensatsammlers umlaufenden Abflussrinne, zu verwenden. In einer Ausführungsform ist ein Prallschutz am Boden des Kondensatsammlers angeordnet. Als Prallschutz wird eine Schüttung aus Kugeln mit einer oben aufliegenden keramischen Platte genutzt oder aber Steine aus Schamott, Ton oder dergleichen, die auf dem Boden angeordnet sind. Diese Prallschutze dienen zugleich dazu, dass sich kein Rußsack bilden kann und der bei der Reinigung abgebürstete Ruß leichter über die Revisionsöffnung entfernt werden kann. Bei einem harten Aufprall eines Kehrgeräts auf diese Prallschutze könnten aber in der Praxis sowohl die keramische Platte als auch die darunter liegenden Kugeln sowie die Steine beschädigt werden. Auch die unter dem Prallschutz liegende, im Wesentlichen aus Schamott bestehende Grundplatte des Schornsteinbodens kann dabei mit beschädigt werden. Durch den Aufprall können zudem Bruchstücke bzw. Brösel des Prallschutzes entstehen. Diese Brösel können zusammen mit dem Schornsteinabwasser und dem Ruß eine Art Brei bilden, welcher wieder den Kondensatablauf verstopfen kann.

Außerdem ist auch der anschließende Austausch des beschädigten, aus einer Vielzahl von losen, einzelnen Teilen und gegebenenfalls Bruchstücken bestehenden Kondensatsammlers bzw. Prallschutzes relativ aufwändig und unschön, da die losen, einzelnen Teile und Bruchstücke, gegebenenfalls zu einem Brei vermischt mit dem Schornsteinabwasser, aufgesammelt werden müssen.

Eine ähnliche Lösung schlägt auch die EP 0123 834 A1 vor. Hierbei wird ein bereits vorgefertigtes Schornsteininnenrohrelement aus Schamotte, Beton oder dergleichen, beim Aufbau eines Schornsteins zusammen mit einem Sockelabschnitt als unteres Ende eines Schornsteins eingesetzt. In einem Boden des Schornsteininnenrohrelements ist eine Durchtrittsöffnung angeordnet, über die angesammeltes Kondensat abfließen kann. Direkt auf dem Boden ist ein Rußfilter, welcher aus einer Schüttung von Blähtonkügelchen besteht, platziert. Auch hier könnten bei einem harten Aufprall eines Kehrgeräts die Kügelchen und der Boden bzw. die Grundplatte des Schornsteins beschädigt werden. Ebenso wie in der zuvor genannten Patentschrift können hierdurch Bruchstücke bzw. Brösel der Blähtonkügelchen entstehen, die zusammen mit dem Schornsteinabwasser und dem Ruß eine Art Brei bilden. Da das Schornsteininnenrohrelement aber wie oben beschrieben ein Teil des Schornsteins ist, kann es nicht einfach herausgenommen werden, um den Brei zu entfernen. Auch ein schnelles und einfaches nachträgliches Einsetzen zur Aufnahme und Filterung von im Schornstein angesammelten Wasser ist durch den Aufbau der Vorrichtung somit nicht möglich.

In der DE 195 17 398 A1 wird eine Vorrichtung für die Kondensatabscheidung und Kondensatneutralisation beschrieben, mit einem nach oben offenen hohlzylinderförmigen, mit Neutralisationstabletten oder Neutralisationsgranulat gefüllten Kondensatauffangbehälter, der seitlich an einem Kaminrohr befestigt werden soll.

Es ist eine Aufgabe der vorliegenden Erfindung eine Alternative zu schaffen, welche die zuvor genannte Problematik adressiert.

Diese Aufgabe wird durch ein Schornsteinabwasser-Filtersystem gemäß Patentanspruch 1 und ein Schornsteinsystem nach Anspruch 11 sowie durch eine Verwendung des Schornsteinabwasser-Filtersystems nach Anspruch 14 gelöst.

Das erfindungsgemäße Schornsteinabwasser-Filtersystem für einen Schornstein, d. h. zum Einsetzen in einen Schornstein, z. B. in einen unteren Abschnitt eines Schornsteins, umfasst zumindest die im Folgenden beschriebenen Komponenten:

Eine Komponente ist Filtermaterial, um das im Schornstein befindliche Schornsteinabwasser bzw. Wasser aufnehmen zu können und es daraufhin beispielsweise an einen an das Schornsteinabwasser-Filtersystem nachgeschalteten üblichen Kondensatablauf, beispielweise einen Siphon, abgeben zu können. Dabei kann das Filtermaterial das Schornsteinabwasser filtern und so beispielsweise von Ruß oder dergleichen befreien. Das Filtermaterial kann dabei bevorzugt einzelne Elemente aufweisen, wie beispielsweise Tonkugeln oder Kohlekugeln, es kann aber auch nur eine Filtermaterialschicht umfassen, beispielsweise eine durchlässige Tonschicht. Je nach Zusammensetzung des Filtermaterials kann während der Filterung so auch das saure Kondenswasser neutralisiert werden.

Das Filtermaterial kann zudem das Schornsteinabwasser bis zu einem gewissen Grad speichern, so dass das Schornsteinabwasser-Filtersystem das gefilterte Wasser verzögert abgeben kann. Hierdurch kann also nicht nur die Wassersäule im Schornstein beeinflusst werden, sondern es kann auch dafür gesorgt werden, dass das Wasser somit im Kondensatablauf verzögert und nicht z. B. schwallartig vollständig auf einmal abfließt, wenn beispielsweise eine Absperrung des Kondensatablaufs geöffnet wird.

Damit das Filtermaterial beispielsweise vor einer Beschädigung eines in den Schornstein herabfallenden Objekts geschützt werden kann, ist das Filtermaterial erfindungsgemäß in einem in ein Rohr eines Schornsteins einsetzbares Filtergehäuse des Schornsteinabwasser-Filtersystems angeordnet.

Dieses Filtergehäuse weist vorzugsweise einen Boden/Deckel bzw. eine Bodenfläche/Deckelfläche und umlaufende Seitenwände auf. Dabei kann die Bodenfläche/Deckelfläche bevorzugt eine kreisrunde Form aufweisen, wobei aber grundsätzlich auch andere Formen möglich sind, insbesondere eine polygonale Form.

Zur Aufnahme des Wassers umfasst das Filtergehäuse zumindest eine Eintrittsöffnung, vorzugsweise mehrere Eintrittsöffnungen. Durch die Eintrittsöffnungen des Filtergehäuses kann das in das Filtergehäuse fließende Wasser in einem ersten Schritt (vor dem eigentlichen Filtern) gesiebt und so beispielsweise von gröberen Verunreinigungen wie Laub etc. befreit werden. Damit das im Filtergehäuse angesammelte Wasser wieder hinausfließen kann, umfasst das Filtergehäuse zumindest eine, bevorzugt zumindest zwei, Austrittsöffnung.

Das Filtergehäuse kann hierzu weitgehend beliebig ausgestaltet sein und z. B. Schlitze, kreisrunde Öffnungen etc. aufweisen.

Bevorzugt weist das Filtergehäuse eine Art Siebstruktur oder dergleichen auf, d. h. eine Vielzahl von Löchern. Dabei könnte das Filtergehäuse z.B. auch ein Gitter oder mehrere Gitter umfassen, aus denen es z. B. zusammengesetzt ist, um so eine siebartige Struktur zu bilden.

Mit einer geeignet gewählten Rastergröße des Gitters bzw. einer geeigneten Anzahl und Beabstandung von Löchern kann dafür gesorgt werden, dass das Schornsteinabwasser leicht, wie bereits oben beschrieben, in das Filtergehäuse hinein- und wieder hinausflie-ßen und dennoch durch das Filtergehäuse von groben Verunreinigungen befreit werden kann.

Fällt ein Objekt in einen Schornstein, beispielsweise ein Kehrgerät eines Schornsteinfegers, so wird das herabfallende Objekt vom Schornsteinabwasser-Filtersystem aufgefangen und landet somit nicht direkt auf der Grundplatte des Schornsteins, wodurch diese vor einer Beschädigung geschützt werden kann. Dadurch, dass das Filtermaterial in einem Filtergehäuse angeordnet und von diesem umgeben ist, ist auch das Filtermaterial vor einem Aufprall des herabfallenden Objekts geschützt. Es entstehen also keine Filtermaterial-Bruchstücke, die einen Kondensatablauf verstopfen könnten.

Besonders bevorzugt weist das Schornsteinabwasser-Filtersystem zusätzlich einen au-ßen am Filtergehäuse angeordneten Prallschutz auf. Dieser Prallschutz kann beispielsweise einen Aufprall eines herabfallenden Objekts auf das Schornsteinabwasser-Filtersystem abdämpfen, wodurch die Grundplatte und das Schornsteinabwasser-Filtersystem vor einer Beschädigung geschützt bleiben können. So können also die Grundplatte des Schornsteins sowie das Schornsteinabwasser-Filtersystem, bzw. das Filtergehäuse selbst, noch zusätzlich vor einem besonders starken Impuls gegen Beschädigung geschützt werden.

Ein erfindungsgemäßes Schornsteinsystem umfasst dementsprechend einen Schornstein und das erfindungsgemäße Schornsteinabwasser-Filtersystem. Das Schornsteinabwasser-Filtersystem kann dabei bereits bei der Erstmontage direkt in den Schornstein eingesetzt werden bzw. es kann z. B. mit dem Rohr des Schornsteins ein hierzu passendes Schornsteinabwasser-Filtersystem - unter Bildung eines kompletten Schornsteinsystems - mitgeliefert werden. Das oben beschriebene Schornsteinabwasser-Filtersystem kann aber auch in einen bereits bestehenden Schornstein eingesetzt werden, um diesen zu einem erfindungsgemäßen Schornsteinsystem nachzurüsten. Das Schornsteinabwasser-Filtersystem ist in beiden Fällen bevorzugt nicht fest in dem Schornstein verbaut, sondern kann bei Belieben wieder herausgenommen werden.

Unter Verwendung des Schornsteinabwasser-Filtersystems kann also in einem Schornstein, vorzugsweise in einem Schornstein feuchteunempfindlicher Bauart, angesammeltes Wasser einfach aufgenommen, gefiltert und abgeführt werden. Zudem kann es als ein Schutz gegen Beschädigungen des Schornsteins dienen, wenn ein Objekt, wie beispielsweise ein Kehrgerät eines Schornsteinfegers, in einen Schornstein hinabfällt.

Zudem können sich durch die Erfindung weitere Vorteile ergeben: Wird z. B. eine Heizung eingeschaltet, so bereitet diese eine Zündung vor. Hierbei entsteht in der Regel ein Überdruck, der in einen Schornstein eingeleitet wird. Liegt beispielsweise ein Tiefdruckgebiet vor, so muss im Schornstein ein noch größerer Widerstand überwunden werden, um eine Zündung durchführen zu können. Eine nächstliegende Öffnung, zu welcher ein Überdruck entweichen kann, ist in der Regel ein Siphon, da dieser häufig nur ca. 2 m entfernt ist. Bis zur Schornsteinmündung müssten hingegen ca. 10 m überwunden werden. Wird der Widerstand im Schornstein bei einer Zündung nun Überwunden, so kann es zu einer Verpuffung mit Ruß kommen, welcher aus dem Siphon in den Aufstellraum des Schornsteins herausschießt, wenn dieser nicht fest mit einem Abwassersystem verbunden ist, sondern - wie dies häufig der Fall ist - offen ist, damit das Kondensat in einem unter dem Siphonausgang befindlichen Behälter tropfen kann. Mittels des Filtermaterials des erfindungsgemäßen Schornsteinabwasser-Filtersystems kann der Druck bei einer Zündphase minimiert werden, wodurch es zu einer geringeren bzw. keiner Verpuffung mit Ruß kommt.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Um den Schornsteinboden und das im Filtergehäuse angeordnete Filtermaterial optimal vor einer Beschädigung eines Impulses durch den Aufprall zu schützen, befindet sich der Prallschutz bzw. das Prallschutzkissen bevorzugt unterhalb und/oder oberhalb des Filtergehäuses. Ist der Prallschutz oberhalb des Filtergehäuses, so besitzt dies den zusätzlichen Vorteil, dass das Filtergehäuse vor lokalen Druckspitzen bzw. Impulsspitzen besser geschützt ist. Ist der Prallschutz unterhalb des Filtergehäuses angeordnet, so ist der empfindliche Schornsteinboden besser vor einer Beschädigung durch lokale Druckspitzen bzw. Impulsspitzen geschützt. Daher ist eine Anordnung unterhalb des Filtergehäuses bevorzugt (sofern dieses selbst stabil genug gebaut ist, beispielsweise aus geeignetem Edelstahl), oder eine Anordnung von Prallschutz(-teilen) oberhalb und unterhalb des Filtergehäuses.

Das Filtergehäuse kann unterschiedliche Materialien, auch Materialkombinationen, umfassen bzw. aus diesen hergestellt werden. Beispielsweise kann das Filtergehäuse einen flexiblen, bruchstabilen Kunststoff umfassen. Bevorzugt umfasst das Filtergehäuse aber ein Metall, besonders bevorzugt ein rostfreies Metall, insbesondere, wie oben erwähnt, Edelstahl.

Damit das Schornsteinabwasser wie erwähnt gut in das Filtergehäuse hineinfließen kann (insbesondere, wenn der Prallschutz oberhalb des Filtergehäuses angebracht ist) bzw. hinausfließen kann (insbesondere, wenn der Prallschutz unterhalb des Filtergehäuses angebracht ist) weist der Prallschutz, insbesondere das Prallschutzkissen, zumindest eine Durchlauföffnung bzw. Prallschutzöffnung auf.

Zudem korreliert vorteilhafterweise die Durchlauföffnung mit zumindest einer Austrittsöffnung bzw. Eintrittsöffnung des Filtergehäuses, das heißt, es entsteht zumindest eine Überlappung oder vorzugsweise eine Überdeckung der Durchlauföffnung zu einer Austrittsöffnung bzw. Eintrittsöffnung des Filtergehäuses.

Die Durchlauföffnung kann vorzugsweise im Wesentlichen (in einem horizontalen Schnitt betrachtet) in einer Mitte des Prallschutzes ausgerichtet sein. Vorzugsweise weist der Prallschutz bzw. das Prallschutzkissen eine Ringform auf.

Der Prallschutz kann einteilig aufgebaut sein oder auch mehrere Komponenten umfassen. So kann der Prallschutz z. B. aus einem Rahmen und innenliegenden Federn, insbesondere Stahlfedern, bestehen.

Vorzugsweise umfasst der Prallschutz zumindest ein Prallschutzkissen oder besteht aus einem solchen.

Um einen Aufprall besonders gut abfedern zu können, umfasst der Prallschutz, insbesondere das Prallschutzkissen, ein flexibles Material oder ist aus diesem gebildet. Beispielsweise können die genannten Federn aus einem flexiblen Material bestehen. Bevorzugt umfasst der Prallschutz bzw. das Prallschutzkissen ein Elastomer, besonders bevorzugt einen Gummi.

Um eine gute Dämpfung zu erreichen und einen flexiblen Prallschutz bereitzustellen, weist der Prallschutz bevorzugt eine Wandstärke von mindestens 5 mm, bevorzugt von mindestens 15 mm, besonders bevorzugt von mindestens 30 mm und ganz besonders bevorzugt von mindestens 55 mm auf. Die Wandstärke des Prallschutzes beschreibt hier die Dicke bzw. Höhe des Prallschutzes, insbesondere eine Dicke eines Prallschutzkissens.

Um beispielsweise das Filtermaterial im Filtergehäuse austauschen oder das Filtergehäuse im Inneren reinigen zu können, umfasst das Filtergehäuse eine vorzugsweise verschließbare Wartungsöffnung. Diese Wartungsöffnung kann beispielsweise durch einen verschließbaren Filtergehäusedeckel oder auch durch seitliche Öffnungen im Filtergehäuse realisiert werden.

Das Filtergehäuse kann aber zusätzlich oder alternativ auch zumindest ein erstes Filtergehäuseteil und zumindest ein zweites Filtergehäuseteil aufweisen. Bevorzugt entspricht dabei das erste Filtergehäuseteil einem oberen Filtergehäuseteil und das zweite Filtergehäuseteil einem unteren Filtergehäuseteil. Die beiden Filtergehäuseteile können vorzugsweise voneinander getrennt werden, d. h. sie sind bevorzugt lösbar miteinander gekoppelt, wodurch dann z. B. auch ohne eine extra Wartungsöffnung das Filtermaterial ausgetauscht werden kann. Zudem wäre es aber auch denkbar, dass das erste Filtergehäuseteil eine verschließbare Wartungsöffnung bzw. einen verschließbaren Deckel aufweist, um das Filtergehäuse auch öffnen zu können, ohne die Filtergehäuseteile auseinandernehmen zu müssen.

Damit das Wasser, wie bereits erklärt, in das Filtergehäuse hinein- oder wieder hinausfließen kann, weist jedes der Filtergehäuseteile zumindest eine Öffnung auf. Bevorzugt weist das erste bzw. das obere Filtergehäuseteil zumindest die Eintrittsöffnung und das zweite bzw. das untere Filtergehäuseteil zumindest die Austrittsöffnung auf. Die Eintrittsöffnungen im oberen Filtergehäuseteil können sich im Deckel und/oder in den Seitenwänden befinden. Die Austrittsöffnungen befinden sich vorzugsweise im Boden des zweiten Filtergehäuses. Bevorzugt weist das zweite Filtergehäuseteil auch eine oder mehrere seitliche Austrittsöffnungen auf. Durch diese zusätzlichen Öffnungen kann im Schornstein angesammeltes Schornsteinabwasser schneller durch das Filtergehäuse abfließen, wenn beispielsweise die Wassersäule aufgrund von starken Unwettern mit hohem Niederschlag schnell stark angestiegen ist.

Auch der Prallschutz kann eine oder mehrere zusätzliche seitliche Austrittsöffnungen aufweisen, insbesondere, wenn er sich unten mittig am Filtergehäuse befindet. Dadurch kann das am Boden angesammelte Schornsteinabwasser beispielsweise schneller an einen dem Schornsteinabwasser-Filtersystem nachgeschalteten Siphon abgegeben werden, der sich meist in der Mitte der Bodenplatte befindet.

Um das im Schornstein - üblicherweise an den Wänden des Schornsteins - herabfließende und angesammelte Wasser in das Filtergehäuse hineinzuleiten, weist das Schornsteinabwasser-Filtersystem bevorzugt einen Kragen auf. Dieser Kragen, welcher z. B. als Gummilippe ausgebildet sein kann, erstreckt sich bevorzugt radial nach außen. Er verläuft vorzugsweise rings um das Filtergehäuse herum.

Das heißt, dass das eingangs beschriebene Schornsteinsystem den, vorzugsweise am Schornsteinabwasser-Filtersystem montierten, Kragen umfasst, der sich zumindest bereichsweise zwischen einer Außenwand des Filtergehäuses (vorzugsweise ringsum umlaufend um das Filtergehäuse) des Schornsteinabwasser-Filtersystems und einer Innenwand eines Schornsteins erstreckt.

Der Kragen kann dabei als Ring ausgebildet sein, dessen Öffnung des Kragens vorzugsweise im Inneren des Filtergehäuses liegt, damit das Wasser ungehindert durch das Filtergehäuse fließen kann.

Vorzugsweise ist der Kragen, bzw. zumindest ein, beispielsweise radial innerer, Abschnitt des Kragens zwischen dem ersten Filtergehäuseteil und dem zweiten Filtergehäuseteil angeordnet. D. h. der Kragen wird vorzugsweise zwischen dem ersten Filtergehäuseteil und dem zweiten Filtergehäuseteil gehalten, besonders bevorzugt geklemmt. Der Abschnitt des Kragens, welcher zwischen dem ersten Filtergehäuseteil und dem zweiten Filtergehäuseteil gehalten bzw. geklemmt wird, wird im Folgenden als Klemmabschnitt bezeichnet.

Damit das Wasser über die Oberseite des Kragens in das Filtergehäuse hineinlaufen kann, ist der Kragen am Filtergehäuse bevorzugt unterhalb zumindest einer Eintrittsöffnung des ersten Filtergehäuses angeordnet. Beispielsweise beträgt der Abstand zwischen einer Oberfläche eines Klemmabschnitts des Kragens und zumindest einer darüber nächstliegenden Eintrittsöffnung des Filtergehäuses bei einer bevorzugten Variante maximal 20 mm, besonders bevorzugt maximal 10 mm.

Damit das im Schornstein befindliche Wasser leicht in das Filtergehäuse des Schornsteinabwasser-Filtersystem fließen kann, weist der Kragen im Inneren des Schornsteins, d. h. wenn das Schornsteinabwasser-Filtersystem in einen Schornstein eingesetzt ist, bevorzugt eine konische Form auf. Hierbei befindet sich bzw. liegt der höchste Punkt des Kragens an einer Innenseite des Schornsteins und der tiefste Punkt befindet sich bzw. liegt an einer Außenseite des Filtergehäuses. Durch diese Form kann das Wasser leicht in die Eintrittsöffnungen des Filtergehäuses hineinfließen.

Insbesondere damit der Kragen bei einer bestimmungsgemäßen Verwendung des Schornsteinabwasser-Filtersystems in einem Schornstein eine für den Verwendungszweck möglichst ideale konische Form im Inneren des Schornsteins aufweisen und das Schornsteinabwasser-Filtersystem durch die Revisionsöffnung leicht in einen Schornstein eingesetzt und wieder herausgenommen werden kann, sind nachfolgende Konstruktionsmerkmale bevorzugt.

Der Kragen kann grundsätzlich, auch starr, vorgeformt sein, wobei er dann die bevorzugte konische Form aufweisen kann. Besonders bevorzugt ist der Kragen flexibel, so dass der Kragen, wie oben beschrieben, eine konische Form im Inneren des Schornsteins aufweisen kann und leicht in ein Schornsteininnenrohr eingesetzt und wieder herausgenommen werden kann.

Dabei besteht der Kragen vorzugsweise im Wesentlichen aus einem flexiblen Material, d. h. er umfasst ein flexibles Material. Dieses flexible Material kann z. B. ein Kunststoff oder auch ein flexibles Metall wie beispielsweise Aluminium sein. Vorzugsweise entspricht das flexible Material einem Elastomer, besonders bevorzugt einem Gummi.

Damit der Kragen sich beim Einsetzen in einen Schornstein in der gewünschten Weise biegt, ist der Außendurchmesser des Kragens (vor einem Einsetzen in den Schornstein) des Schornsteinsystems größer als ein Innendurchmesser eines Innenrohrs des Schornsteins, in den das Schornsteinabwasser-Filtersystem eingesetzt werden soll. Der Kragen weist hierzu besonders bevorzugt einen Außendurchmesser von mindestens 105% bis 120% auf, im Verhältnis zu einem definierten Schornsteininnenmaß eines Schornsteininnenrohrs.

Unter einem "definierten" bzw. vorgegebenen Schornsteinmaß bzw. Schornsteininnenmaß ist im Rahmen der vorliegenden Erfindung entsprechend ein Innendurchmesser eines Innenrohrs des Schornsteins, für den das Schornsteinabwasser-Filtersystem ausgebildet ist, zu verstehen.

Es gibt Schornsteininnenrohre mit unterschiedlichen Standardinnendurchmessern. Typischerweise zählen hierzu (z. B. in Europa gemäß der DIN EN 18160, Teil 1, "Abgasleitungen") Innendurchmesser von 130 mm, 140 mm, 150 mm, 160 mm, 180 mm, 200 mm, 220 mm sowie 240 mm. Ein "Standard-Schornstein" wäre in dem Sinne ein Schornstein, der die Norm- oder Standardmaße aufweist. Dementsprechend kann unter einem "definierten" bzw. vorgegebenen Schornsteinmaß bzw. Schornsteininnenmaß ein jeweiliges Norm- oder Standardmaß eines "Standard-Schornsteins" zu verstehen sein, für den das jeweilige Schornsteinabwasser-Filtersystem konstruiert wurde und angeboten wird.

Insbesondere für die genannten gängigen "Standard-Schornsteine" weist der Kragen besonders bevorzugt einen Außendurchmesser von mindestens 145 mm und/oder maximal 260 mm auf. Der Kragen kann aber auch auf jedes beliebige Maß eines Schornsteins zugeschnitten werden.

Um einen stabilen Kragen (damit dieser beispielsweise bei einem Aufprall eines herabfallenden Objekts auf das Schornsteinabwasser-Filtersystem oder beim Einsetzen und Herausnehmen aus dem Schornstein nicht zerreißt) bereitzustellen, weist der Kragen bevorzugt eine Wandstärke bzw. Dicke bzw. Höhe von mindestens 3 mm, besonders bevorzugt - bei Krägen mit größeren Durchmessern (Außendurchmesser des Kragens) von mehr als 200 mm - von mindestens ca. 8 mm auf.

Um andererseits die gewünschte Flexibilität des Kragens bereitzustellen, sollte der Kragen aber auch nicht zu dick sein. Bevorzugt hat der Kragen z. B. bei größeren Durchmessern von mehr als 200 mm eine Wandstärke bzw. Dicke bzw. Höhe von maximal 12 mm, besonders bevorzugt maximal 10 mm. Bei kleineren Durchmessern, z. B. von 150 mm, hat der Kragen bevorzugt eine Wandstärke bzw. Dicke bzw. Höhe von maximal 5 mm, besonders bevorzugt von maximal 3,5 mm.

Des Weiteren kann der Kragen vorzugsweise Rillen umfassen, die sich auf der Oberfläche des Kragens, bevorzugt parallel und/oder in gleichen Abständen zueinander, befinden. Diese Rillen können sich radial, zirkular und/oder quer über den Kragen erstrecken. Durch diese Rillen kann die Flexibilität des Kragens ebenfalls erhöht werden.

Auch die Breite des Kragens im Verhältnis zum Abstand zwischen Schornsteininnerohrdurchmesser und Filtergehäuse beeinflusst die Beweglichkeit des Kragens im Schornsteinsystem.

Um eine besonders gute Stabilität des Filtergehäuses im Schornstein zu erlangen, ist der Kragen vorzugsweise in etwa in einem mittleren Bereich des Filtergehäuses (bezüglich der Höhe des Filtergehäuses) angeordnet.

Die Abmaße des Filtergehäuses werden vorzugsweise geeignet gewählt, um ein bevorzugtes Filtervolumen für das Schornsteinabwasser zur Verfügung zu stellen. Das Filtervolumen beeinflusst wiederum das Volumen des Schornsteinabwassers, welches im Filtergehäuse zu einem bestimmten Zeitpunkt aufgenommen werden kann, sowie dessen Fließgeschwindigkeit.

Ein Abmaß des Filtergehäuses - und somit ein Filtervolumen - ist somit wiederum vorteilhafterweise an ein Abmaß eines Schornsteininnrohrs angepasst, in das das Schornsteinabwasser-Filtersystem bestimmungsgemäß eingesetzt wird.

Bevorzugt ist das Schornsteinabwasser-Filtersystem bzw. das Filtergehäuse und das Filtermaterial so ausgebildet, dass - im sauberen Zustand des Filters - mindestens 900 ml/min Wasser abgeführt werden können bzw. durch den Filter durchlaufen.

Das Volumen wird u. a. durch folgende Abmaße des Filtergehäuses bestimmt: die Breite des Filtergehäuses in einer horizontalen Querschnittfläche, also der Durchmesser bei einem zylindrischen Filtergehäuse, und die Höhe in der vertikalen Längsrichtung des Filtergehäuses.

Der Außendurchmesser des Filtergehäuses inkl. umlaufendem Kragen (im gebogenen Zustand) ist vorzugsweise kleiner als eine Breite einer Tür einer Revisionsöffnung eines Schornsteins, durch die das Schornsteinabwasser-Filtersystem in den Schornstein eingesetzt und herausgenommen werden kann. Auch eine Gesamthöhe des Filtergehäuses ist vorzugsweise kleiner als eine Höhe der Tür.

Vorzugsweise weist das Filtergehäuse einen Außendurchmesser von mindestens 30% und/oder von maximal 70% eines definierten Schornsteininnenmaßes eines Schornsteininnenrohrs auf.

Dementsprechend könnte ein Filtergehäuse des Schornsteinabwasser-Filtersystems bevorzugt einen Außendurchmesser von ca. 60 mm, ca. 70 mm, ca. 80 mm oder ca.100 mm aufweisen, je nach Schornsteininnendurchmesser. Z. B. kann das Filtergehäuse einen Außendurchmesser von 60 mm aufweisen, wenn es in ein Schornsteininnenrohr mit einem Innendurchmesser von 120 mm eingesetzt wird. Bei einem Innenrohrdurchmesser von 160 mm kann z. B. das Filtergehäuse mit einem Außendurchmesser von 70 mm verwendet werden und bei einem Innenrohrdurchmesser von 180 mm wird vorzugsweise ein Filtergehäuse mit einem Außendurchmesser von ca. 80 mm oder ca. 100 mm verwendet. Bei einem Innenrohrdurchmesser von 240 mm beispielsweise ein Filtergehäuse mit einem Außendurchmesser von ca. 100 mm. Für noch größere Schornsteine können aber auch andere Filtergehäusegrößen gefertigt werden.

Eine bevorzugte Höhenabmessung ist z. B. 100 mm.

Aufgrund seiner Anordnung und Beschaffenheit hat der Kragen gleich mehrere Vorteile und Dienste. Wie oben beschrieben, dient der Kragen zum einen dazu, das in einem Schornstein herabfließende und befindliche Wasser aufzufangen und in das Filtergehäuse zu leiten. Zum anderen kann der Kragen aufgrund seiner Anordnung am Filtergehäuse zur Zentrierung des Filtergehäuses im Schornstein dienen. Es kann zudem als zusätzlicher "Seitenaufprallschutz" dienen, wenn z. B. ein Objekt schräg von oben auf das Filtergehäuse fällt. Durch die flexible Beschaffenheit bzw. durch das flexible Material des Kragens kann er einen solchen Aufprall eines Objekts zu Teilen abdämpfen und einen Stoß seitlich gegen die Wand verhindern bzw. ebenfalls abdämpfen.

Der Kragen und der Aufprallschutz können zudem ebenfalls dazu dienen, dass z. B. Ruß, Laub, Dreck etc. erst gar nicht oder wenn dann nur in geringem Maße in beispielsweise einen Siphon gelangen kann. Sollte dennoch eine Verschmutzung des Siphons auftreten, kann dieser leicht beispielsweise durch einfaches Spülen gereinigt werden. Es müssen also keine zusätzlichen Komponenten aus dem Schornstein entnommen werden und gereinigt werden, um eine Verunreinigung oder Verstopfung zu beheben, was unter Umständen sehr zeitintensiv sein kann.

Um die Filtergehäuseteile in einfacher Weise miteinander zu verbinden und gegebenenfalls um den Kragen zwischen sich einzuklemmen, sind die Filtergehäuseteile über zumindest ein Befestigungsmittel (vorzugsweise eine durchgehende Schraube) miteinander verbunden. Vorzugsweise erstreckt sich das Befestigungsmittel zumindest über eine gesamte Höhe bzw. Seitenlänge des Filtergehäuses. Vorzugsweise reicht das Befestigungsmittel über das Filtergehäuse hinaus. Bevorzugt verläuft das Befestigungsmittel durch eine Deckenwand des ersten Filtergehäuseteils, besonders bevorzugt durch ein Zentrum der Deckenwand, und durch einen Boden des zweiten Filtergehäuseteils, besonders bevorzugt durch ein Zentrum des Bodens. Die Filtergehäuseteile stehen bei einer Befestigung durch ein Befestigungsmittel nicht zwingend unmittelbar in direktem Kontakt zueinander. Ist, wie oben beschrieben, ein Kragen zwischen den Filtergehäuseteilen angeordnet, so können die Filtergehäuseteile durch diesen Kragen getrennt voneinander sein.

Um die Montage der Filtergehäuseteile zu erleichtern und diese bei einer Montage gegeneinander zu zentrieren, weist zumindest eines der Filtergehäuseteile eine Anzahl von Zentrierelementen (d. h. mindestens eines, bevorzugt aber mehrere) auf, welche mit dem jeweils anderen Filtergehäuseteil zusammenwirken. Die Zentrierelemente sind dabei vorzugsweise an einem Rand der Seitenwände des ersten Filtergehäuses angeordnet und weisen in Richtung des zweiten Filtergehäuseteils und/oder sie sind am oberen Rand der Seitenwände des zweiten Filtergehäuses angeordnet und weisen in Richtung des ersten Filtergehäuseteils.

Ein Zentrierelement kann dabei unterschiedliche Formen aufweisen. So können die Zentrierelemente beispielsweise als Platten oder Stäbe ausgebildet sein, die an einem Filtergehäuseteil anmontiert sind, oder beispielsweise als Zacken, die ineinander greifen und in den Filtergehäuseteilen integriert sind

Sofern, wie bei dem oben beschriebenen Ausführungsbeispiel, Zentrierelemente an den Filtergehäuseteilen zusammenwirken, weist der Kragen, der sich zwischen den Filtergehäuseteilen zumindest teilweise befinden kann, zumindest ein Kragenzentrierelement, bevorzugt eine Aussparung auf. Diese Kragenzentrierelemente bzw. die Aussparungen liegen besonderes bevorzugt im/am Klemmabschnitt des Kragens. Ein azimutaler Winkel und eine radiale Position eines Kragenzentrierelements sind dazu vorzugsweise an eine Position des Zentrierelements eines Filtergehäuseteils angepasst. Dadurch können die Zentrierelemente des ersten Filtergehäuseteils und/oder des zweiten Filtergehäuseteils trotz des zwischen ihnen liegenden Kragens mit dem dementsprechenden Filtergehäuseteil zusammenwirken.

Dadurch, dass das Schornsteinabwasser-Filtersystem, wie oben beschrieben, aus miteinander verbundenen und zusammenhängenden Komponenten besteht, kann das Schornsteinabwasser-Filtersystem leicht in einem Arbeitsschritt beispielsweise händisch in einen Schornstein eingesetzt und auch wieder herausgenommen werden. Es bedarf keiner zusätzlichen Einrichtung, um beispielsweise einzelne Komponenten, z. B. das Filtermaterial, in komplizierten Verfahren aus dem Schornstein zu entfernen.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
- Figur 1: einen schematischen Längsschnitt durch ein bevorzugtes Ausführungsbeispiel eines Schornsteinabwasser-Filtersystems,
- Figur 2: eine Unteransicht auf das Schornsteinabwasser-Filtersystem nach Figur 1,
- Figur 3: das Schornsteinabwasser-Filtersystem nach Figur 1 in einem unteren Abschnitt eines Schornsteins (der Schornstein ist geschnitten dargestellt).

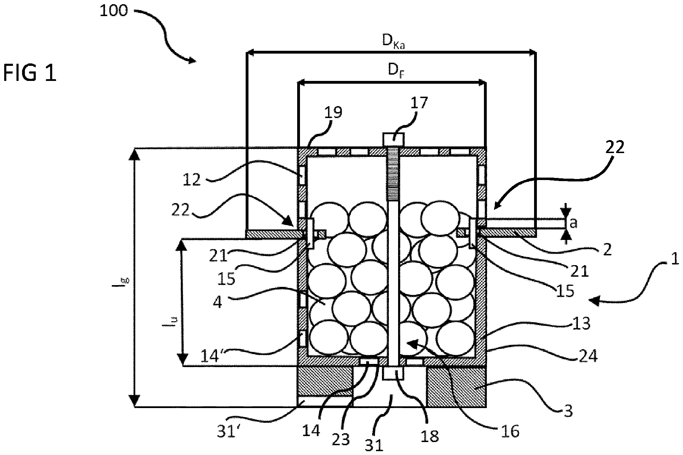

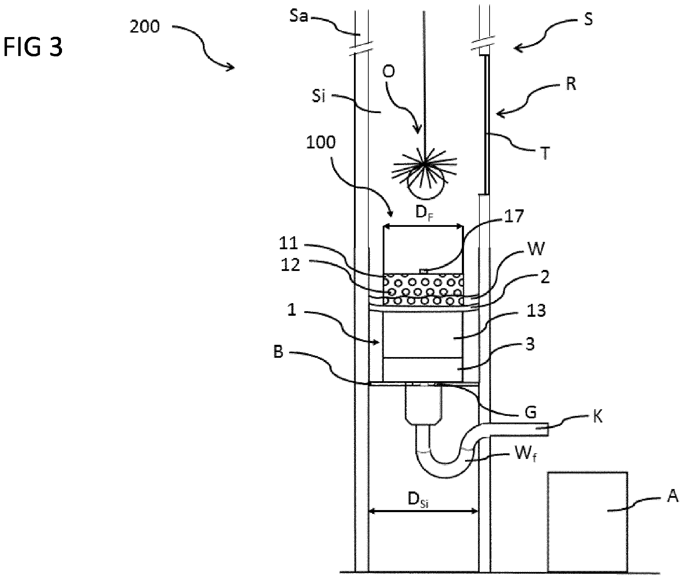

Das in den Figuren 1 bis 3 gezeigte Schornsteinabwasser-Filtersystem 100, hier ein im Wesentlichen zylinderförmiges Filtergehäuse 1, umfasst einen um das Filtergehäuse 1 ringförmig umlaufenden Kragen 2 und einen unterhalb des Filtergehäuses 1 liegenden Prallschutz 3 in Form eines ringförmigen Prallschutzkissens 3. Im Filtergehäuse 1 befindet sich erfindungsgemäß ein Filtermaterial 4, hier bevorzugt konkret eine Schüttung aus Tonkugeln 4, die Schornsteinabwasser W bzw. Wasser W (siehe Figur 3) aufsaugen und wieder abgeben können bzw. filtern.

Das Filtergehäuse 1 setzt sich dabei aus einem ersten Filtergehäuseteil 11, hier konkret einem oberen Filtergehäuseteil 11, und einem zweiten Filtergehäuseteil 13, hier konkret einem unteren Filtergehäuseteil 13, zusammen. Das obere Filtergehäuseteil 11 weist einen Deckel 19 und eine zylindermantelförmig umlaufende Seitenwand 25 auf und das untere Filtergehäuseteil 13 weist einen Boden 23 und eine ebenfalls zylindermantelförmig umlaufende Seitenwand 24 auf, die an die Seitenwand 25 des oberen Filtergehäuseteils 11 angepasst ist.

Der Deckel 19 sowie die Seitenwand 24 des oberen Filtergehäuses 11 zeigen mehrere Eintrittsöffnungen 12. Das untere Filtergehäuseteil 13 weist in seinem Boden 23 Austrittsöffnungen 14 auf.

Der untere Rand der Seitenwand 25 des oberen Filtergehäuses 11 und der obere Rand der Seitenwand 24 des unteren Filtergehäuses 13 stehen hier nicht im direkten Kontakt zueinander.

Zwischen dem oberen Filtergehäuseteil 11 und dem unteren Filtergehäuseteil 13 ist der Kragen 2, hier eine ringförmige Gummilippe 2, angeordnet. In einem radial inneren Klemmabschnitt 22 wird hierbei die Gummilippe 2 zwischen dem oberen Filtergehäuseteil 11 und dem unteren Filtergehäuseteil 13 gehalten bzw. geklemmt. Die Gummilippe 2 erstreckt sich von diesem Klemmabschnitt 22 radial weiter nach außen und verläuft rings um das Filtergehäuse 1 herum. Anstatt einer Gummilippe 2 könnte auch eine elastische ringförmige Lippe aus anderen Materialien, vorzugsweise aber ein Elastomer, genutzt werden.

Damit die Gummilippe 2 die notwendige Verformbarkeit aufweist, weist sie bevorzugt eine Dicke bzw. Höhe von ca. 3 mm auf. Aus Stabilitätsgründen beträgt die Dicke bevorzugt mindestens 1 mm.

Damit das obere Filtergehäuseteil 11 und das untere Filtergehäuseteil 13 zentriert zueinander ausgerichtet sind und sich beispielsweise auch bei einem Aufprall eines herabfallenden Objekts (siehe auch Figur 3) nicht verschieben können, umfasst hier das untere Filtergehäuseteil 13 Zentrierelemente 15. Diese Zentrierelemente 15 sind, in Figur 1, als Metallbleche ausgebildet. Es wären aber auch andere Ausgestaltungen möglich, wie beispielsweise Bolzen.

Die Zentrierelemente 15 sind, beispielsweise in regelmäßigen Abständen, entlang des Umfangs an der Innenseite der Seitenwand 24 des unteren Filtergehäuseteils 13 montiert und ragen über einen oberen Rand der Seitenwand 24 des unteren Filtergehäuseteils 13 hinaus. Der Innendurchmesser des oberen Filtergehäuseteils 11 ist bevorzugt zumindest so groß wie der Innendurchmesser des unteren Filtergehäuses 13, besonders bevorzugt gleich groß.

Dadurch kann das obere Filtergehäuseteil 11 auf das untere Filtergehäuseteil 13 gesteckt werden, wobei die Zentrierelemente 15 in das obere Filtergehäuseteil 11 hineingreifen und das obere Filtergehäuseteil 11 so auf dem unteren Filtergehäuseteil 13 zentrieren bzw. positionieren.

Es wäre aber genauso möglich, dass die Zentrierelemente 15 am oberen Filtergehäuseteil 11 anmontiert sind und entsprechend der Innendurchmesser des unteren Filtergehäuseteils 13 zumindest so groß wie der Innendurchmesser des oberen Filtergehäuses 11, besonders bevorzugt gleich groß, ist.

Zudem wäre es auch denkbar, dass die Zentrierelemente 15 nicht als Teile anmontiert sind, sondern die Filtergehäuseteile direkt während der Fertigung so ausgebildet werden, dass das obere Filtergehäuseteil 11 und das untere Filtergehäuseteil 13 zusammenwirken können. So könnten beispielsweise die Seitenwände 25, 24 des oberen Filtergehäuseteils 11 und des unteren Filtergehäuseteils 13 an ihren einander zugewandten Rändern zumindest teilweise Zacken aufweisen, welche bei einem Zusammensetzen des oberen Filtergehäuseteils 11 und des unteren Filtergehäuseteils 13 ineinander greifen. Auch andere Ausgestaltungen sind denkbar.

Die zwischen dem oberen Filtergehäuse 11 und dem unterem Filtergehäuse 13 befindliche Gummilippe 2 weist im Bereich der Zentrierelemente 15 Kragen-Zentrierelemente 21, hier konkret Aussparungen 21 bzw. Durchgangslöcher 21, auf. Bei der Montage kann die Gummilippe 2 nun mit den Aussparungen 21 auf die Zentrierelemente 15 des unteren Filtergehäuseteils 13 aufgesteckt werden, wobei die Zentrierelemente 15 über eine obere Oberfläche der Gummilippe 2 hinausreichen.

Das obere Filtergehäuseteil 11 und das untere Filtergehäuseteil 13 sind über ein Befestigungsmittel 16, hier konkret eine Schraube 16, miteinander verbunden. Diese Schraube 16 erstreckt sich über eine gesamte Länge des Filtergehäuses 1.

Eine Auflagefläche eines Schraubenkopfs 18 der Schraube 16 liegt dabei auf einer Außenfläche des Bodens 23 des unteren Filtergehäuseteils 13 auf. Der Schraubenkopf 18 kann auch direkt mit dem unteren Filtergehäuseteil 13 verschweißt sein. Eine Mutter 17, in die die Schraube 16 oben endseitig hineingedreht ist, drückt dann gegen eine Außenfläche des Deckels 19 des oberen Filtergehäuses 11. Durch die Schraubverbindung kann das Filtergehäuse 1 leicht und schnell geöffnet werden, um beispielsweise das im Filtergehäuse 1 angeordnete Filtermaterial 4 auszutauschen. Die Schraube 16 wird in die Mutter 17 eingedreht und festgezogen, nachdem das untere Filtergehäuseteil 13 mit dem Filtermaterial 4 gefüllt wurde und die Gummilippe 2 und das obere Filtergehäuseteil 11 auf dem unteren Filtergehäuseteil 13 aufgesteckt und positioniert wurden. Durch das Anziehen der Schraube 16 wird der Gummiring 2 zwischen dem oberen Filtergehäuseteil 11 und dem unteren Filtergehäuseteil 13 fest eingeklemmt und gehalten. Um bei begrenzter Gesamthöhe des Schornsteinabwasser-Filtersystems 100 ausreichend Filtermaterial 4 in das untere Filtergehäuseteil 13 einfüllen zu können, ist das untere Filtergehäuseteil 13 bevorzugt höher als das obere Filtergehäuseteil 11. Die Höhe Iᵤ des unteren Filtergehäuseteils 13 beträgt bevorzugt mindestens 40 %, besonders bevorzugt mindestens 50%, ganz, besonders bevorzugt mindestens 80 % der Gesamthöhe I_{g}. Um das Schornsteinabwasser-Filtersystem 100 in den Schornstein S einsetzen und wieder herausnehmen zu können, ist die Gesamthöhe I_{g} des Schornsteinabwasser-Filtersystems 100 vorzugsweise kleiner als die Höhe der Tür T der Revisionsklappe R.

Der unterhalb des Filtergehäuses 1 liegende Prallschutz 3, hier wie erwähnt ein ringförmiges Prallschutzkissen 3, besteht im Wesentlichen aus einem elastischen Material, vorzugsweise einem Elastomer, besonders bevorzugt einem Gummi. Der Prallschutz kann dabei beispielsweise auf das Filtergehäuse geklebt sein und/oder mit diesem formschlüssig gekoppelt sein.

Dieses Prallschutzkissen 3 dient dazu, einen Aufprall eines herabfallenden Objekts O, beispielsweise einer Kehrkugel O, abdämpfen. Hierzu wird auf Figur 3 verwiesen.

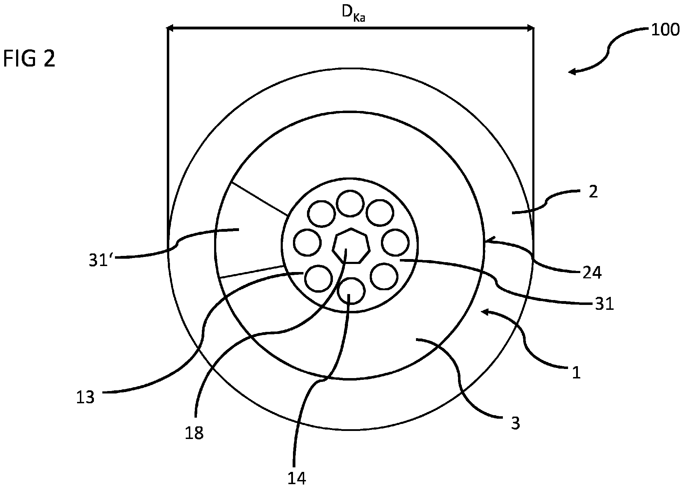

Da das Prallschutzkissen 3 ringförmig ist, zeigt es zudem eine zentrale Prallschutzöffnung 31, die unterhalb der Austrittsöffnungen 14 des unteren Filtergehäuseteils 13 liegt. Dadurch kann durch die Austrittsöffnungen 14 herabfließendes Wasser auch weiterhin durch das Prallschutzkissen 3 aus dem Schornsteinabwasser-Filtersystem 100 mittig nach unten herausfließen. Dies ist in der Unteransicht in Figur 2 besonders gut zu sehen.

In Figur 3 ist das Schornsteinabwasser-Filtersystem 100 aus Figur 1 und Figur 2 in einem Innenrohr Si bzw. Schornsteininnenrohr Si in einem unteren Abschnitt eines Schornsteins S eingesetzt.

Der Schornstein S des Schornsteinsystems 200 umfasst ein Schornsteininnenrohr Si, in welchem das Schornsteinabwasser-Filtersystem 100 eingesetzt ist. Zudem umfasst der Schornstein S ein das Schornsteininnrohr Si umgebenes Schornsteinaußenrohr Sa sowie eine Revisionsöffnung R, die eine verschließbare Tür T aufweist.

Um das Filtergehäuse 1 in den Schornstein S einsetzen zu können, weist das Filtergehäuse 1 wie oben beschrieben einen Außendurchmesser D_{F} auf, der kleiner ist als der

Innendurchmesser D_{Si} des Schornsteininnerohrs des Schornsteins S, in den das Schornsteinabwasser-Filtersystem 100 eingesetzt ist.

Das Schornsteinabwasser-Filtersystem 100 liegt hier auf einer Grundplatte B bzw. Schamottplatte B des Schornsteinbodens auf. Unterhalb des Schornsteinabwasser-Filtersystems 100 befindet sich ein Kondensatablauf K, hier ein Siphon K, das an seinem Eingang ein Gitter G aufweist, durch das das im Schornsteinabwasser-Filtersystem 100 gefilterte Wasser W_{f} hineinfließen kann.

Das beispielsweise aufgrund von Kondensatbildung, Regen oder Schnee befindliche Wasser W bzw. Schornsteinabwasser W wird von der Gummilippe 2 aufgefangen, die sich, wie in Figur 3 gut zu sehen ist, bis an einen inneren Rand des Schornsteininnerohrs Si erstreckt. Es ist dabei auch zu erkennen, dass die Gummilippe 2 nach dem Einsetzen des Schornsteinabwasser-Filtersystems 100 in den Schornstein S eine konische Form im Schornsteininneren aufweist. Diese konische Form entsteht daher, dass die Gummilippe 2 flexibel ist und der Außendurchmesser D_{KA} (wie er in Figur 1 und Figur 2 eingezeichnet ist) der Gummilippe 2, wie ebenfalls oben beschrieben, größer ist als der Innendurchmesser D_{Si} des Schornsteininnenrohrs Si, in den das Schornsteinabwasser-Filtersystem 100 eingesetzt ist.

Wird nun das Schornsteinabwasser-Filtersystem 100 durch die Revisionsöffnung R in den Schornstein S eingesetzt und nach unten geschoben, so wölbt sich die Gummilippe 2 am äußeren Rand nach oben und die konische Form entsteht. Der höchste Punkt der Gummilippe 2 liegt hierbei am äußeren Rand des Schornsteininnenrohrs Si, in den das Schornsteinabwasser-Filtersystem 100 eingesetzt ist, und der tiefste Punkt der Gummilippe 2 liegt an einer Außenseite des Filtergehäuses 1.

Das im Schornstein S befindliche Wasser W fließt nun direkt über die Eintrittsöffnungen 12 in das Filtergehäuse 1 oder das Wasser W wird über die konische Gummilippe 2 in das Filtergehäuse 1 geleitet. Damit das Wasser W sich nicht über eine Unterkante der Revisionsöffnung R im Schornstein S anstaut, ist der Abstand a (wie in Figur 1 gezeigt) zwischen einer ersten Eintrittsöffnung 12 und einer Oberfläche der Gummilippe 2 in ihrem Klemmabschnitt 22 möglichst gering. Bevorzugt beträgt der Abstand a maximal 20 mm, besonders bevorzugt maximal 10 mm.

In einer Variante der erfindungsgemäßen Vorrichtung kann das untere Filtergehäuse 13 (wie in Figur 1 exemplarisch im linken Abschnitt des unteren Filtergehäuses gezeigt) an den Seitenwänden 24 zusätzliche Austrittöffnungen 14' aufweisen. Steigt die Wassersäule beispielsweise aufgrund von Unwettern im Schornsteininneren schnell stark an, so kann das gefilterte Wasser W_{f} leicht durch die zusätzlichen Austrittsöffnungen 14' des Schornsteinabwasser-Filtersystems 100 abgeleitet werden. Damit das gefilterte Wasser W_{f} in den Siphon K hineinfließen kann, weist auch der Prallschutz 3 seitliche Prallschutzöffnungen 31' auf (wie ebenfalls in Figur 1 exemplarisch im linken Abschnitt des Prallschutzkissens 3 und in Figur 2 auf der linken Seite gezeigt).

Aufgrund der siebartigen Struktur des oberen Filtergehäuseteils 11 wird das in das Schornsteinabwasser-Filtersystem 100 hineinfließende Wasser W zunächst von groben Verunreinigungen wie beispielsweise von in den Schornstein S gefallenen kleinen Ästen, Laub oder dergleichen befreit.

Daraufhin wird das Wasser W im Filtergehäuse 1 von dem dort aufgeschütteten Filtermaterial 4 bzw. den Tonkugeln 4 aufgesogen und gefiltert. Tonkugeln 4 können z. B. Rußbestände oder Schwefelrückstände aus dem Wasser W herausfiltern und so das Wasser W neutralisieren.

Das nun gefilterte Wasser W_{f} fließt durch die Austrittsöffnung 14, 14` des unteren Filtergehäuseteils 13 in den nach das Schornsteinabwasser-Filtersystem 100 geschalteten Siphon K. Aufgrund der Aufnahme des Wassers W durch das Filtermaterial 4 wird das Wasser W verzögert abgegeben. Dadurch steigt, wie bereits beschrieben, auch die Wassersäule im Siphon K nur verzögert an.

Das nun im Siphon K angesammelte gefilterte Wasser W_{f} kann in ein unterhalb einer Ausgangsöffnung des Siphons K befindliches Auffangbecken A abfließen und aufgefangen werden.

Das erfindungsgemäße Schornsteinabwasser-Filtersystem 100 erlaubt es also, Schornsteinabwasser W in einem Schornstein S aufzunehmen, zu filtern und abzuführen. Die Wassersäule im Schornstein S und/oder die Verzögerungswirkung kann durch eine Auswahl des Filtermaterials 4 und/oder Bemessung des Volumens wie oben beschrieben beeinflusst (und in gewisser Weise reguliert) werden.

Zudem wird durch das Schornsteinabwasser-Filtersystem 100 eine Grundplatte B des Schornsteinbodens sowie das Filtermaterial 4 des Schornsteinabwasser-Filtersystems 100 vor einer Beschädigung durch einen Aufprall eines herabfallenden Objekts O auf das Schornsteinabwasser-Filtersystem 100 geschützt. Fällt nämlich ein Objekt O bzw. eine Kehrkugel O, wie in Figur 2 angedeutet, auf das Schornsteinabwasser-Filtersystem 100, so wird der Aufprall, wie bereits erläutert, durch das Filtergehäuse 1 selbst, den elastischen Gummiring 2 sowie durch das unterhalb des Filtergehäuses 1 liegende Prallschutzkissen 3 abgefedert.

Dadurch, dass das Filtergehäuse 1, die Gummilippe 2 und das Prallschutzkissen 3 miteinander verbunden sind, kann das gesamte Schornsteinabwasser-Filtersystem 100 beispielsweise händisch durch eine Revisionsöffnung R (in Figur 3 zu sehen) in der Schonsteinwand in einem Stück und in einem Arbeitsschritt in einen Schornstein S eingesetzt werden. Genauso einfach kann das Schornsteinabwasser-Filtersystem 100 aus dem Schornstein S auch herausgenommen werden, um es beispielsweise zu säubern oder um Filtermaterial 4 zu erneuern. Es müssen nicht einzelne Komponenten oder beispielsweise einzelne Tonkugeln umständlich in einem unteren Abschnitt eines Schornsteins beispielsweise maschinell aufgesammelt werden.

Es wird abschließend noch einmal darauf hingewiesen, dass es sich bei den vorhergehend detailliert beschriebenen Vorrichtungen und Verwendungen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können.

### Bezugszeichenliste

1 Filtergehäuse
2 Kragen/ Gummilippe
3 Prallschutz/ Prallschutzkissen
4 Filtermaterial/ Tonkugeln
11erstes Filtergehäuseteil/ oberes Filtergehäuseteil
12 Eintrittsöffnungen
13 zweites Filtergehäuseteil/ unteres Filtergehäuseteil
14, 14` Austrittsöffnungen
15 Zentrierelemente
16 Befestigungsmittel/ Schraube
17 Mutter
18 Schraubenkopf
19 Deckel
21 Kragen-Zentrierelemente/ Aussparungen
22 Klemmabschnitt
23 Boden
24, 25 Seitenwände
31, 31` Prallschutzöffnung
100 Schornsteinabwasser-Filtersystem
200 Schornsteinsystem
a Abstand
A Auffangbecken
B Grundplatte/ Schamottplatte
D_{F} Außendurchmesser
D_{Si} Innendurchmesser
D_{KA} Außendurchmesser
G Gitter
K Kondensatablauf/ Siphon
L_{g} Gesamthöhe
Lᵤ Höhe des unteren Filtergehäuses
O Objekt/ Kehrkugel
R Revisionsöffnung
S Schornstein
Sa Schornsteinaußenrohr
Si Schornsteininnenrohr
T Tür
W Wasser/ Schornsteinabwasser
W_{f} gefiltertes Wasser

## Patentansprüche

1. Schornsteinabwasser-Filtersystem (100), zum Einsetzen in einen Schornstein (S), wobei das Schornsteinabwasser-Filtersystem (100) zumindest folgende Komponenten umfasst:
- ein in ein Rohr eines Schornsteins (S) einsetzbares Filtergehäuse (1) mit zumindest einer Eintrittsöffnung (12) und zumindest einer Austrittsöffnung (14),
- im Filtergehäuse (1) angeordnetes Filtermaterial (4)
- und vorzugsweise zumindest einen Prallschutz (3), welcher außen am Filtergehäuse (1) angeordnet ist.

2. Schornsteinabwasser-Filtersystem nach Anspruch 1,
wobei der Prallschutz (3) zumindest ein Prallschutzkissen (3) umfasst, welches sich unterhalb und/oder oberhalb des Filtergehäuses (1) befindet,
und/oder
wobei der Prallschutz (3), insbesondere das Prallschutzkissen (3), zumindest eine Durchlauföffnung (31, 31') aufweist.

3. Schornsteinabwasser-Filtersystem nach einem der vorstehenden Ansprüche, wobei der Prallschutz (3) ein flexibles Material umfasst, vorzugsweise ein Elastomer.

4. Schornsteinabwasser-Filtersystem nach einem der vorstehenden Ansprüche, wobei das Filtergehäuse (1)
- eine, vorzugsweise verschließbare, Wartungsöffnung
und/oder
- zumindest ein erstes Filtergehäuseteil (11) und zumindest ein zweites Filtergehäuseteil (13), bevorzugt ein oberes Filtergehäuseteil (11) und ein unteres Filtergehäuseteil (13), umfasst.

5. Schornsteinabwasser-Filtersystem nach einem der vorstehenden Ansprüche, wobei das erste Filtergehäuseteil (11) und das zweite Filtergehäuseteil (13) jeweils zumindest eine Öffnung (12, 14, 14`) aufweisen.

6. Schornsteinabwasser-Filtersystem nach einem der vorstehenden Ansprüche, wobei das Schornsteinabwasser-Filtersystem (100) einen Kragen (2) umfasst, welcher sich vorzugsweise vom Filtergehäuse (1) radial nach außen erstreckt und/oder welcher vorzugsweise rings um das Filtergehäuse (1) umläuft.

7. Schornsteinabwasser-Filtersystem nach Anspruch 6,
wobei der Kragen (2) zumindest am Filtergehäuse (1) unterhalb zumindest einer Eintrittsöffnung (12) des Filtergehäuses (1) angeordnet ist
und/oder
wobei der Kragen (2) ein flexibles Material umfasst, vorzugsweise ein Elastomer.

8. Schornsteinabwasser-Filtersystem nach Anspruch 6 oder 7, wobei zumindest ein Abschnitt (22) des Kragens (2) zwischen dem ersten Filtergehäuseteil (11) und dem zweiten Filtergehäuseteil (13) angeordnet ist und vorzugsweise zwischen dem ersten Filtergehäuseteil (11) und dem zweiten Filtergehäuseteil (13) gehalten, besonders bevorzugt geklemmt, wird.

9. Schornsteinabwasser-Filtersystem nach einem der vorstehenden Ansprüche 4 bis 8, wobei die Filtergehäuseteile (11, 13) über zumindest ein Befestigungsmittel (16) miteinander verbunden sind, wobei sich vorzugsweise das Befestigungsmittel (16) zumindest über eine gesamte Höhe des Filtergehäuses (10) erstreckt, wobei besonders bevorzugt das Befestigungsmittel (16) durch eine Deckenwand (19) des ersten Filtergehäuseteils (11) und durch einen Boden (23) des zweiten Filtergehäuseteils (13) verläuft und/oder mit der Deckenwand (19) und/oder dem Boden (23) verbunden ist.

10. Schornsteinabwasser-Filtersystem nach einem der vorstehenden Ansprüche, wobei zumindest eines der Filtergehäuseteile (11, 13) eine Anzahl von Zentrierelementen (15) aufweist, welche mit dem jeweils anderen Filtergehäuseteil (13, 11) zusammenwirken, um die Filtergehäuseteile (11, 13) bei einer Montage gegeneinander zu zentrieren,
und wobei vorzugsweise der Kragen (2) eine Anzahl von Kragen-Zentrierelementen (21), besonders bevorzugt eine Anzahl von Aussparungen (21), aufweist, deren Position ganz besonders bevorzugt jeweils an eine Position eines Zentrierelements (15) eines Filtergehäuseteils (11, 13) angepasst ist.

11. Schornsteinsystem (200) umfassend einen Schornstein (S) und ein Schornsteinabwasser-Filtersystem (100) nach einem der vorstehenden Ansprüche.

12. Schornsteinsystem nach Anspruch 11, mit einem, vorzugsweise am Schornsteinabwasser-Filtersystem (100) befestigten, Kragen (2), der sich zumindest bereichsweise zwischen einer Außenwand des Filtergehäuses (1) des Schornsteinabwasser-Filtersystems (100) und einer Innenwand des Schornsteins (S) erstreckt,
wobei der Kragen (2) bevorzugt eine konische Form im Inneren des Schornsteins (S) aufweist, wobei besonders bevorzugt der höchste Punkt des Kragens (2) sich an einer Innenseite des Schornsteins (S) befindet und der tiefste Punkt sich an einer Außenseite eines Filtergehäuses (10) des Schornsteinabwasser-Filtersystems (100) befindet.

13. Schornsteinsystem nach Anspruch 12, wobei der Kragen (2) - vor einem Einsetzen in den Schornstein - einen Außendurchmesser (D_{KA}) aufweist, der größer ist als ein Innendurchmesser (D_{Si}) eines Innenrohrs (Sᵢ) des Schornsteins (S).

14. Verwendung eines Schornsteinabwasser-Filtersystems (100) zur Wasserabführung in einem Schornstein (S), wobei das Schornsteinabwasser-Filtersystem (100) zumindest folgende Komponenten umfasst:
- ein in ein Rohr eines Schornsteins (S) einsetzbares Filtergehäuse (1) mit zumindest einer Eintrittsöffnung (12) und zumindest einer Austrittsöffnung (14),
- im Filtergehäuse (1) angeordnetes Filtermaterial (4)
- und bevorzugt einen außen am Filtergehäuse (1) angeordneten Prallschutz (3).

## Claims

1. A chimney waste water filter system (100) for insertion into a chimney (S), the chimney waste water filter system (100) comprising at least the following components:
- a filter housing (1) insertable into a pipe of a chimney (S), comprising at least one inlet opening (12) and at least one outlet opening (14),
- filter material (4) arranged in the filter housing (1)
- and preferably at least one impact protector (3) disposed on the outside of the filter housing (1).

2. Chimney waste water filter system according to claim 1,
wherein the impact protector (3) comprises at least one impact protector cushion (3), which is located below and/or above the filter housing (1),
and/or
wherein the impact protector (3), in particular the impact protector cushion (3), has at least one passage opening (31, 31').

3. Chimney waste water filter system according to any of the preceding claims, wherein the impact protector (3) comprises a flexible material, preferably an elastomer.

4. Chimney waste water filter system according to any of the preceding claims, wherein the filter housing (1) comprises
- a maintenance opening, preferably lockable
and/or
- at least one first filter housing part (11) and at least one second filter housing part + (13), preferably an upper filter housing part (11) and a lower filter housing part (13).

5. Chimney waste water filter system according to any of the preceding claims, wherein the first filter housing part (11) and the second filter housing part (13) each have at least one opening (12, 14, 14').

6. Chimney waste water filter system according to any of the preceding claims, wherein the chimney waste water filter system (100) comprises a collar (2) which preferably extends radially outwards from the filter housing (1) and/or which preferably runs around the filter housing (1).

7. Chimney waste water filter system according to claim 6,
wherein the collar (2) is arranged at least on the filter housing (1) below at least one entry opening (12) of the filter housing (1)
and/or
wherein the collar (2) comprises a flexible material, preferably an elastomer.

8. Chimney waste water filter system according to claim 6 or 7, wherein at least a portion (22) of the collar (2) is arranged between the first filter housing part (11) and the second filter housing part (13) and is preferably held, more preferably clamped, between the first filter housing part (11) and the second filter housing part (13).

9. Chimney waste water filter system according to any of the preceding claims 4 to 8, wherein the filter housing parts (11, 13) are connected to the chimney waste water filter system via at least one fastening means (16), wherein the fastening means (16) extend at least over an entire height of the filter housing (10), wherein the fastening means (16) more preferably extends through a ceiling wall (19) of the first filter housing part (11) and through a base (23) of the second filter housing part (13) and/or is connected to the ceiling wall (19) and/or the base (23).

10. Chimney waste water filter system according to any of the preceding claims, wherein at least one of the filter housing parts (11, 13) comprises a number of centering elements (15), which interact with the respective other filter housing part (13, 11) in order to center the filter housing parts (11, 13) against each other during assembly, and wherein preferably the collar (2) has a number of collar centering elements (21), more preferably a number of recesses (21), the position of which is most preferably adapted in each case to a position of a centering element (15) of a filter housing part (11, 13).

11. Chimney system (200) comprising a chimney (S) and a chimney waste water filter system (100) according to any of the preceding claims.

12. Chimney system according to claim 11, with a collar preferably fixed at the chimney water filter system (100), which extends at least in certain areas between an outer wall of the filter housing (1) of the chimney waste water filter system (100) and an inner wall of the chimney (S), wherein the collar (2) preferably has a conical shape inside the chimney (S), wherein more preferably the highest point of the collar (2) is located on an inner side of the chimney (S) and the lowest point is located on an outer side of a filter housing (10) of the chimney waste water filter system (100).

13. Chimney system according to claim 12, wherein the collar (2) - before insertion into the chimney - has an outer diameter (DKA) which is larger than an inner diameter (DSi) of an inner pipe (Si) of the chimney (S).

14. Use of a chimney waste water filter system (100) for draining water from a chimney (S), wherein the chimney waste water filter system (100) comprises at least the following components:
- a filter housing (1) insertable into a pipe of a chimney (S) comprising at least one inlet opening (12) and at least one outlet opening (14),
- filter material (4) arranged in the filter housing (1)
- and preferably at least one impact protector (3) disposed on the outside of the filter housing (1).

## Revendications

1. Système de filtration d'eaux usées de cheminée (100), destiné à être inséré dans une cheminée (S), le système de filtration d'eaux usées de cheminée (100) comprenant au moins les composants suivants:
- un boîtier de filtre (1) pouvant être inséré dans un tuyau d'une cheminée (S), avec au moins une ouverture d'entrée (12) et au moins une ouverture de sortie (14),
- matériau filtrant (4) disposé dans le boîtier du filtre (1)
- et de préférence au moins une protection contre les chocs (3), qui est disposé à l'extérieur du corps de filter (1).

2. Système de filtration des eaux usées de la cheminée selon la revendication 1,
dans lequel la protection contre les chocs (3) comprend au moins un coussin de protection contre les chocs (3) qui se trouve en dessous et/ou au-dessus du boîtier de filtre (1),
et/ou
dans lequel la protection contre les chocs (3), en particulier le coussin de protection contre les chocs (3), présente au moins une ouverture de passage (31, 31').

3. Système de filtration des eaux usées de cheminée selon l'une quelconque des revendications précédentes, dans lequel la protection contre les chocs (3) comprend un matériau flexible, de préférence un élastomère.

4. Système de filtration d'eaux usées de cheminée selon l'une quelconque des revendications précédentes, dans lequel le boîtier de filtre (1)
- une ouverture de maintenance, de préférence verrouillable
et/ou
- au moins une première partie de boîtier de filtre (11) et au moins une deuxième partie de boîtier de filtre (13), comprenant de préférence une partie de boîtier de filtre supérieure (11) et une partie de boîtier de filtre inférieure (13).

5. Système de filtration des eaux usées de cheminée selon l'une quelconque des revendications précédentes, dans lequel la première partie de boîtier de filtre (11) et la deuxième partie de boîtier de filtre (13) comportent chacune au moins une ouverture (12, 14, 14').

6. Système de filtration des eaux usées de cheminée selon l'une quelconque des revendications précédentes, dans lequel le système de filtration d'eaux usées de cheminée (100) comprend une collerette (2) qui s'étend de préférence radialement vers l'extérieur depuis le boîtier de filtre (1) et/ou qui s'étend de préférence tout autour du boîtier de filtre (1).

7. Système de filtration des eaux usées de la cheminée selon la revendication 6,
la collerette (2) étant disposée au moins sur le boîtier de filtre (1), en dessous d'au moins une ouverture d'entrée (12) du boîtier de filtre (1)
et/ou
dans lequel le collerette (2) comprend un matériau flexible, de préférence un élastomère.

8. Système de filtration d'eaux usées de cheminée selon la revendication 6 ou 7, dans lequel au moins une partie (22) de la collerette (2) est disposée entre la première partie de boîtier de filtre (11) et la deuxième partie de boîtier de filtre (13) et est tenue de préférence entre la première partie de boîtier de filtre (11) et la deuxième partie de boîtier de filtre (13) de manière particulièrement préférée être serrée.

9. Système de filtration d'eaux usées de cheminée selon l'une quelconque des revendications 4 à 8 dans lequel les parties de boîtier de filtre (11, 13) sont reliées à l'aide d'au moins un moyen de fixation (16), de préférence le moyen de fixation (16) s'étendant au moins sur toute une hauteur du boîtier de filtre (10) dans lequel, de manière particulièrement préférée, le moyen de fixation (16) s'étend à travers une paroi supérieure (19) de la première partie de boîtier de filtre (11) et à travers un fond (23) de la deuxième partie de boîtier de filtre (13) et/ou est relié à la paroi supérieure (19) et/ou au fond (23).

10. Système de filtration d'eaux usées de cheminée selon l'une quelconque des revendications précédentes, dans lequel au moins l'une des parties de boîtier de filtre (11, 13) comprend un certain nombre d'éléments de centrage (15) qui coopèrent respectivement avec l'autre partie de boîtier de filtre (13, 11) pour centrer les parties de boîtier de filtre (11, 13) l'une contre l'autre lors d'un montage,
et dans lequel de préférence la collerette (2) présente un certain nombre d'éléments de centrage de collerette (21), de manière particulièrement préférée un certain nombre d'évidements (21), dont la position est de manière particulièrement plus préférée adaptée respectivement à une position d'un élément de centrage (15) d'une partie de boîtier de filtre (11, 13).

11. Système de cheminée (200) comprenant une cheminée (S) et un système de filtration des eaux usées de la cheminée (100) selon l'une quelconque des revendications précédentes.

12. Système de cheminée selon la revendication 11, avec une collerette (2) fixée de préférence au système de filtration des eaux usées de la cheminée (100), qui s'étend au moins par zones entre une paroi extérieure du boîtier de filtre (1) du système de filtration des eaux usées de la cheminée (100) et une paroi intérieure de la cheminée (S),
la collerette (2) ayant de préférence une forme conique à l'intérieur de la cheminée (S), le point le plus haut de la collerette (2) étant de manière particulièrement de préférence situé sur un côté intérieur de la cheminée (S) et le point le plus bas étant situé sur un côté extérieur d'un boîtier de filtre (10) du système de filtration des eaux usées de la cheminée (100).

13. Système de cheminée selon la revendication 12, dans lequel la collerette (2) - avant une insertion dans la cheminée - présente un diamètre extérieur (D_{KA}) qui est supérieur à un diamètre intérieur (D_{Si}) d'un tuyau intérieur (sᵢ) de la cheminée (S).

14. Utilisation d'un système de filtration des eaux usées de la cheminée (100) pour l'évacuation de l'eau dans une cheminée (S), le système de filtration des eaux usées de la cheminée (100) comprenant au moins les composants suivants :
- un boîtier de filtre (1) pouvant être inséré dans un tuyau d'une cheminée (S), avec au moins une ouverture d'entrée (12) et au moins une ouverture de sortie (14),
- matériau filtrant (4) disposé dans le boîtier du filtre (1)
- et de préférence au moins une protection contre les chocs (3), qui est montée/disposé à l'extérieur du corps de filter (1).
